# EUROPEAN PATENT APPLICATION

(11) **EP 4 831 800 A1**
(43) Date of publication of application: **28.10.2026**
(21) Application number: 24906555.8
(22) Date of filing: 20.12.2024
(51) Int. Cl.: G06F 9/448

(54) **SUB-OPERATION GROUPING METHOD AND APPARATUS IN AUTOMATED PROCESS, AND CONTROL METHOD AND APPARATUS**

(30) Priority: 22.12.2023 CN 202311778741; 22.12.2023 CN 202311778360
(71) Applicant: Megarobo Technologies Co., Ltd., Beijing 102208 (CN)
(72) Inventor: SUN, Fei, Beijing 102208 (CN)
(74) Representative: Grünecker Patent- und Rechtsanwälte PartG mbB
(86) International application number: PCT/CN2024/141071
(87) International publication number: WO 2025/131083

(57) **Abstract**

A sub-operation grouping method and apparatus in an automated process, and a control method and apparatus, an electronic device and a storage medium. The method comprises: acquiring an ordered operation group of an automated process, wherein the ordered operation group comprises a plurality of ordered sub-operations, and the types of the sub-operations comprise a main operation and auxiliary operations other than the main operation; and on the basis of the ordered operation group, using a sub-operation of the first main operation that is executed earlier than the main operation and the main operation as an operation group, using a sub-operation between two adjacent main operations in the ordered operation group and the main operation executed later among the two adjacent main operations as another operation group, and using a sub-operation of the last main operation that is executed later than the main operation as a further operation group.

## Description

This application claims the priority to Chinese Patent Application No. 202311778741.8, titled "SUB-OPERATION GROUPING METHOD AND APPARATUS IN AUTOMATED PROCESS, AND CONTROL METHOD AND APPARATUS", filed on December 22, 2023 with the China National Intellectual Property Administration, and to Chinese Patent Application No. 202311778360.X, titled "CONTROL METHOD AND APPARATUS FOR AUTOMATED PROCESS, ELECTRONIC DEVICE, AND STORAGE MEDIUM", filed on December 22, 2023 with the China National Intellectual Property Administration, both of which are incorporated herein by reference in their entireties.

### FIELD

The present disclosure relates to the field of automation, and more particularly, to a method for grouping sub-operations in an automated process, an apparatus for grouping sub-operations in an automated process, a control method for an automated process, an electronic device, and a storage medium.

### BACKGROUND

At present, many fields are undergoing continuous automation transformation to reduce manpower requirements and improve efficiency. Automation systems are widely used in automated manufacturing, automated inspection, and automated testing or experimentation. Taking a laboratory automation system as an example, the automation system may include multiple devices, and users build corresponding automated processes with the automation system to achieve testing/experimental objectives. Generally, an automated process may include multiple flow nodes, each node corresponding to one device, and one device generally corresponds to multiple operations. For example, an automated process may include the following nodes: a consumable (such as a well plate) node (corresponding to a start position) → a first device node (such as a liquid workstation) → a second device node (such as an incubator) → an end node (the final destination of the consumable, corresponding to an end position). For example, the first device node corresponds to a device such as the liquid workstation, and corresponds to multiple operations, namely, four operations of door opening, internal transfer within the liquid workstation, door closing, and liquid transfer.

Before the automation system runs, the automated process is parsed into an operation sequence. Generally, a node may be parsed into multiple operations, and the multiple operations are defined as pre-operations, primary operations, and post-operations according to the main function of the device. As the names suggest, the primary operation is the main operation performed by the device. For example, since the main function of the liquid workstation is liquid transfer, the liquid transfer operation is the primary operation. The operations before the liquid transfer operation may be defined as pre-operations, and similarly, the operations after the liquid transfer operation may be defined as post-operations. During the execution of an automated process, pre-operations, primary operations, and post-operations are usually regarded as individuals. However, in some scenarios, it is required to regard these operations as a whole to achieve related functions, that is, to group these operations with each group serving as a whole to achieve related functions. For example, for a scenario where a process is to be terminated during execution, it is to plan a path for transfer the consumable to a specified position. However, how to perform grouping of related sub-operations is an urgent issue to be addressed in this field.

### SUMMARY

In view of the issues described above, the present disclosure is proposed. In accordance with a first aspect of the disclosure, a method for grouping sub-operations in an automated process is provided. The automated process comprises a plurality of nodes connected with each other, and the plurality of nodes comprises at least one device node. The method comprises:
acquiring an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, and the type of primary operation comprises an operation that corresponds to the device node and corresponds to a primary function of the device node; and
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

In an embodiment, before the "based on the ordered series of operations, grouping a sub-operation executed before a first primary operation and the first primary operation into an operation group; for every two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method comprises:
deleting, for each primary operation in the ordered series of operations, a sequential relationship between the primary operation and a sub-operation next to the primary operation, based on the ordered series of operations.

In an embodiment, the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
setting an initial operation number for each of the plurality of sub-operations in the ordered series of operations, and setting an operation group number of a current operation group to an initial value;
traversing each of the plurality of sub-operations in the ordered series of operations, and in response to an operation number of a current sub-operation being the initial operation number, performing:
   modifying the operation group number of the current operation group to a target value;
   setting the operation number of the current sub-operation to the target value; and
   acquiring every adjacent sub-operation of the current sub-operation, and setting an operation number of the adjacent sub-operation to the target value in response to the operation number of the adjacent sub-operation being the initial operation number; repeating with the adjacent sub-operation by acquiring a yet adjacent sub-operation of the adjacent sub-operation and setting an operation number of the yet adjacent sub-operation to the target value in response to the operation number of the yet adjacent sub-operation being the initial operation number, until no further next adjacent sub-operation is obtainable for the adjacent sub-operation, and the traversal going to a next sub-operation in the ordered series of operations, wherein the target value differs for each modification during traversal; and
grouping sub-operations with the same operation number into the same operation group.

In an embodiment, the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
creating a stack and initializing the stack to be empty;
setting an initial operation number for each of the plurality of sub-operations in the ordered series of operations, and setting an operation group number of a current operation group to an initial value; and
traversing each of the plurality of sub-operations in the ordered series of operations, and in response to an operation number of a current sub-operation being the initial operation number, performing:
   modifying the operation group number of the current operation group to a target value; and pushing the current sub-operation onto the stack;
   executing, in response to determining that the stack is not empty, a popping step and a pushing step, wherein
      the popping step refers to: popping a sub-operation at a top of the stack, and setting the operation number of the sub-operation to the target value in response to the operation number of the sub-operation being the initial operation number; and
      the pushing step refers to: acquiring an adjacent sub-operation of the sub-operation at the top of the stack, and pushing the adjacent sub-operation onto the stack in response to an operation number of the adjacent sub-operation being the initial operation number;
   determining whether the stack is empty, and repeating the popping step and the pushing step until it is determined that the stack is empty; and
   determining, in response to determining that the stack is empty, whether the traversing is completed, and in response to the traversing not being completed, traversing a next sub-operation in the ordered series of operations until all sub-operations are grouped.

In an embodiment, the method further comprises: determining, based on the ordered series of operations, an order of the primary operations in the ordered series of operations to obtain an ordered primary operation sequence;
after the "based on the ordered series of operations, grouping a sub-operation executed before a first primary operation and the first primary operation into an operation group ; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method further comprises:
traversing each operation group, determining an intersection between sub-operations included in a current operation group and the ordered primary operation sequence;
in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations, wherein the correspondence is a correspondence between the primary operation and the auxiliary operation.

In an embodiment, in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations comprises:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
   in response to a sub-operation in the current operation group being a primary operation, determining that the sub-operation being the primary operation belongs to another operation set; and
   in response to a sub-operation in the current operation group being an auxiliary operation, determining whether the auxiliary operation belongs to the same operation set as the primary operation in the intersection based on a correspondence between the auxiliary operation and a previous primary operation.

In an embodiment, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

In an embodiment, by determining that all sub-operations in the current operation group belong to a last operation set in response to the intersection being empty.

In accordance with a second aspect of the disclosure, a control method for an automated process is provided, comprising any of the foregoing method for grouping sub-operations in the automated process.

In accordance with a third aspect of the disclosure, an apparatus for grouping sub-operations in an automated process is provided. The automated process comprises a plurality of nodes connected with each other, and the plurality of nodes comprises at least one device node. The apparatus comprises:
an acquisition module, configured to acquire an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, the type of primary operation comprises an operation that corresponds to the device node and corresponds to a primary function of the device node; and
a grouping module, configured to, based on the ordered series of operations, group a sub-operation executed before a first primary operation and the first primary operation into an operation group; for two adjacent primary operations in the ordered series of operations, group a sub-operation between the two adjacent primary operations and a later-executed primary operation of the two adjacent primary operations into another operation group; and group a sub-operation executed after a last primary operation into yet another operation group.

In accordance with a fourth aspect of the disclosure, an electronic device is provided, comprising a processor and a memory, characterized in that the memory stores computer program instructions, and the computer program instructions, when executed by the processor, implement any of the foregoing method for grouping sub-operations in an automated process.

In accordance with a fifth aspect of the disclosure, a storage medium is provided, where program instructions are stored in the storage medium, and the program instructions, when executed, implement the any of the foregoing method for grouping sub-operations in an automated process.

In the above technical solution, for practical application scenarios (for example, a process termination scenario), by processing and controlling the process using the method for grouping sub-operations in an automated process provided by the present disclosure, processing efficiency can be effectively improved. Specifically, during the execution of an automated process, when a "terminate" command is required to be executed for the automated process, the grouping method provided by the present disclosure is first used to group sub-operations, so as to form multiple operation groups. Subsequently, the corresponding operation groups are regarded as a whole for considering subsequent related issues or steps. Compared to a method of deleting remaining unexecuted sub-operations and adding operations to go to a specified position, when applied to special application scenarios (for example, process termination), the method for grouping sub-operations in an automated process according to the present disclosure is more efficient and has strong reusability, and such advantages are particularly evident for complex automated processes.

The above description is merely an overview of the technical solutions of the present disclosure. To understand the technical means of the present disclosure more clearly, embodiments can be implemented according to the content of the specification. Furthermore, to make the above and other objectives, features, and advantages of the present disclosure more apparent, specific embodiments of the present disclosure are provided below.

### BRIEF DESCRIPTION OF THE DRAWINGS

The embodiments of the present disclosure are described in more detail with reference to the drawings, and the above and other objects, features and advantages of the present disclosure will become more apparent. The drawings are provided for further understanding of the embodiments of the present disclosure and constitute a part of the specification. Together with the embodiments of the present disclosure, the drawings serve to explain the present disclosure, but do not impose any limitation on the present disclosure. In the drawings, the same reference numerals generally represent the same components or steps.
FIG. 1 shows a schematic flowchart of an automated process according to an embodiment of the present disclosure;
FIG. 2 shows a schematic flowchart of a method for grouping sub-operations in an automated process according to an embodiment of the present disclosure;
FIG. 3 shows a schematic diagram of an ordered series of operations acquired according to connections among multiple nodes in the automated process corresponding to the embodiment in FIG. 1;
FIG. 4 shows a schematic diagram of a grouping result based on the ordered series of operations shown in FIG. 3;
FIG. 5 shows a flowchart of determining an ordered primary operation sequence according to an embodiment of the present disclosure;
FIG. 6 shows a schematic logic diagram of a grouping method according to an embodiment of the present disclosure;
FIG. 7 shows a schematic logic diagram of a grouping method according to another embodiment of the present disclosure;
FIG. 8 shows a schematic diagram of an ordered series of operations acquired according to connections among multiple nodes in an automated process according to another embodiment of the present disclosure;
FIG. 9 shows a schematic block diagram of an apparatus for grouping sub-operations in an automated process according to an embodiment of the present disclosure; and
FIG. 10 shows a schematic block diagram of an electronic device according to an embodiment of the present disclosure.

### DETAILED DESCRIPTION

To make the objectives, technical solutions, and advantages of the present disclosure more apparent, exemplary embodiments according to the present disclosure will be described in detail below with reference to the drawings. Apparently, the described embodiments are only part of the embodiments of the present disclosure, not all embodiments. It should be understood that the present disclosure is not limited by the exemplary embodiments described herein. Based on the embodiments of the present disclosure described herein, all other embodiments obtained by those skilled in the art without any creative effort shall fall within the scope of the present disclosure.

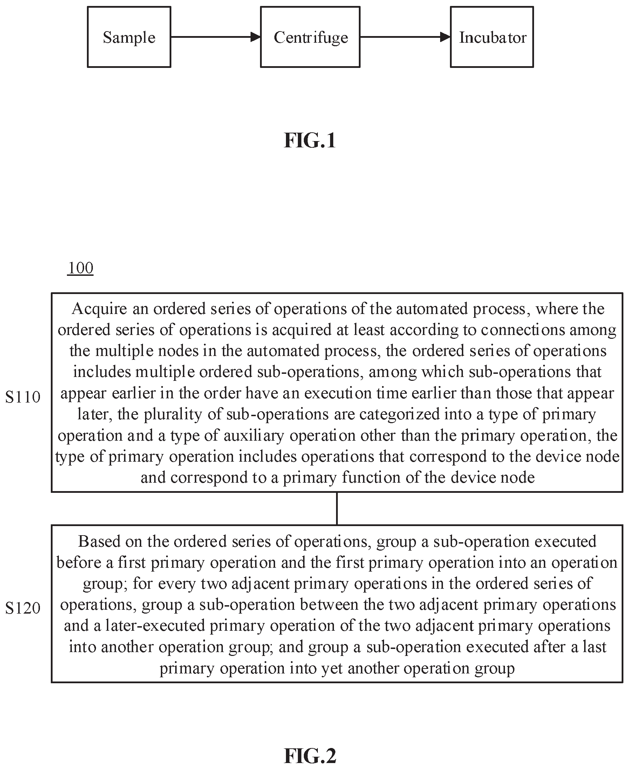

To at least partially address the above issues, a method for grouping sub-operations in an automated process is provided in the embodiment of the present disclosure. The method for grouping sub-operations in an automated process may be applied in an apparatus for grouping sub-operations in an automated process. The automated process includes multiple nodes connected with each other, and the nodes include at least one device node. In an embodiment, for example, as shown in FIG. 1, which is a schematic diagram of an automated process provided according to an embodiment of the present disclosure, both the centrifuge and the incubator in FIG. 1 may be considered as device nodes. When a sample is transferred to the device corresponding to the centrifuge node, related centrifugation operations are performed. Similarly, when the sample is transferred to the incubator, incubation operations are performed. The connecting lines between nodes may be understood as transfer operations. For example, the line between the start node and the node corresponding to the centrifuge indicates that the sample is required to be transferred from the start position to the centrifuge.

FIG. 2 shows a schematic flowchart of a method 100 for grouping sub-operations in an automated process according to an embodiment of the present disclosure. As shown in FIG. 2, the method 100 may include steps S110 and S120.

In step S110, an ordered series of operations in the automated process is acquired, where the ordered series of operations is acquired at least based on connections among nodes in the automated process. The ordered series of operations includes multiple ordered sub-operations, among which sub-operations that appear earlier in the order have an execution time earlier than those that appear later. The sub-operations are categorized into a type of primary operation and a type of auxiliary operation other than the primary operation. The type of primary operation refers to operation(s) corresponding to a device node and corresponding to a primary function of the device node.

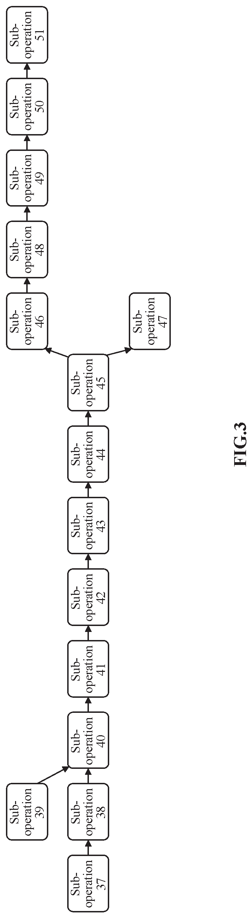

The ordered series of operations, as the name suggests, includes operations that are ordered. In an embodiment, after a user builds an automated process as shown in FIG. 1, some processing is performed according to the connections among nodes in the automated process, for example a process parsing is carried out, to obtain the ordered series of operations. The ordered series of operations includes multiple ordered sub-operations, among which sub-operations that appear earlier in the order have an execution time earlier than those that appear later. FIG. 3 shows a schematic diagram of an ordered series of operations acquired according to connections among the nodes of the automated process in FIG. 1. The arrow directions and the positional sequence of sub-operations indicate the execution order of the sub-operations. It can be understood that the sub-operations in the ordered series of operations are the smallest units of operations.

Exemplarily, for some application scenarios, the ordered series of operations may be acquired according to the connections among the nodes and some special requirements arising during execution. For example, during process execution, when a liquid workstation lacks pipette tip for liquid transfer, operations related to the pipette tip loading need to be inserted, thereby acquiring the ordered series of operations.

In step S110, the sub-operations are categorized into a type of primary operation and a type of auxiliary operation other than the primary operation. A primary operation of a respective node refers to an operation that corresponds to a primary function of a device corresponding to the respective node. It can be understood an ordered series of operations includes two types of sub-operations: one is primary operation, and the other is auxiliary operation. The primary operation of a respective node refers to an operation that corresponds to a primary function of a device corresponding to the respective node. For example, the primary function of a centrifuge is centrifugation, so the centrifugation operation is a primary operation. For example, referring to FIG. 3, the ordered series of operations in FIG. 3 corresponds to the automated process shown in FIG. 1, with the primary function of transferring a sample to the centrifuge for centrifugation and then to the incubator for incubation. In the ordered series of operations shown in FIG. 3, since the flowchart in FIG. 1 corresponds to two device nodes, two corresponding primary operations are included in the ordered series of operations, namely, sub-operation 42 and sub-operation 49. Sub-operation 42 is a centrifugation operation, and sub-operation 49 is an incubation operation. For sub-operation 37 (centrifuge rotation operation for rotating into position before centrifugation), sub-operation 38 (centrifuge door opening operation), sub-operation 39 (robotic arm 1 transferring the sample to an intermediate position), sub-operation 40 (robotic arm 2 transferring the sample from the intermediate position into the centrifuge), sub-operation 41 (centrifuge door closing operation), sub-operation 43 (centrifuge rotation operation for rotating into position after centrifugation), sub-operation 44 (centrifuge door opening operation), sub-operation 45 (transferring operation by robotic arm 2, that is, the robotic arm transferring the sample from the centrifuge to an intermediate position), sub-operation 46 (robotic arm 1 transferring the sample from the intermediate position into the incubator), sub-operation 47 (centrifuge door closing operation), sub-operation 48 (internal transfer of the sample to an incubation station within the incubator), sub-operation 50 (internal transfer of the sample to the incubator exit within the incubator), and sub-operation 51 (robotic arm 1 transferring the sample away from the incubator), they are all auxiliary operations.

Exemplarily, auxiliary operations include pre-operation(s) executed before a corresponding primary operation and post-operation(s) executed after the corresponding primary operation. The pre-operation or the post-operation includes an inter-device transfer operation (robotic arm transferring). Reference is made to FIG. 3. Sub-operation 42 is a primary operation; auxiliary operations including sub-operations 37, 38, 39, 40, and 41 before this primary operation are all pre-operations to the primary operation 42; and similarly, sub-operations 43, 44, and 47 after this sub-operation 42 (primary operation) are post-operations to this primary operation. Sub-operation 49 is a primary operation; sub-operations 45, 46, and 48 before this primary operation are all pre-operations to the primary operation 49; and sub-operations 50 and 51 after this primary operation are post-operations to this primary operation. It should be noted that the correspondence between a primary operation and an auxiliary operation is determined according to an attribute of the device which corresponds to the primary operation. Not all sub-operations located before a primary operation are auxiliary operations for the primary operation. For example, sub-operation 47 represents centrifuge door closing, so sub-operation 47 is a post-operation to the primary operation corresponding to sub-operation 42, but not a pre-operation to the primary operation corresponding to sub-operation 49.

Exemplarily, before building an automated process, a user performs device attribute configuration, which includes configuring the primary operation(s) of a device and pre-operation(s) and post-operation(s) to the primary operation (for example, according to the device attribute of a centrifuge, rotation into position and centrifuge door opening are required before centrifugation, so pre-operations for the centrifugation operation is required to be configured, such as sub-operation 37 and sub-operation 38 described above). In this way, matching can be performed, for example through IDs (or in other ways). And then, based on the corresponding ID, it can be determined which operation is a primary operation, which sub-operation is a pre-operation to the primary operation and which sub-operation is a post-operation to the primary operation, thus establishing a correspondence between the primary operation and the corresponding auxiliary operation (pre-operation and/or post-operation). In an embodiment, each device has a primary command and several pre-operation commands and post-operation commands. The primary command is identified by an IsMainCommand attribute, and the pre-operation commands and post-operation commands are associated with their corresponding primary command through a MainDeviceCommandId attribute. This information is attached to the process when the process is built. During process parsing, each sub-operation is assigned with an ID (for example, an integer-type ID). Subsequently, the correspondence between the primary operation and the pre-operation and the post-operation to the primary operation can be determined according to the MainDeviceCommandId attribute of each sub-operation. In an embodiment, taking the incubator as an example, during process parsing, an ID (such as 2) is assigned to each of the primary operation Incubate, the pre-operation PlateIn, and the post-operation PlateOut. In this way, with the MainDeviceCommandId, it can be determined that the primary operation Incubate has a correspondence with the pre-operation PlateIn and the post-operation PlateOut.

Exemplarily, in some application scenarios, due to requirements on the orientation of a consumable before and after transferring, the orientation of the consumable (which is the container for holding the sample) is adjusted during transferring through a commutator. In an embodiment, for example, a robotic arm 1 transfers the sample to the commutator, the commutator rotates for orientation change, and then a robotic arm 2 transfers the sample to a specified position. If the distance permits, robotic arm 1 can transfer the sample to the specified position without robot arm 2. In this regard, the commutating operation is also an auxiliary operation. According to the position of the commutating operation in the ordered series of operations and the correspondence between the commutating operation and the primary operation, the commutating operation may be a pre-operation or a post-operation. Similarly, robotic arm transferring, that is, transfer operation, may be a pre-operation or a post-operation according to the position of the transfer operation in the ordered series of operations.

In step S120, based on the ordered series of operations, a sub-operation executed before a first primary operation and the first primary operation are grouped into an operation group; for two adjacent primary operations in the ordered series of operations, a sub-operation between the two adjacent primary operations and a later-executed primary operation of the two adjacent primary operations are grouped into another operation group; and a sub-operation executed after a last primary operation is grouped into yet another operation group.

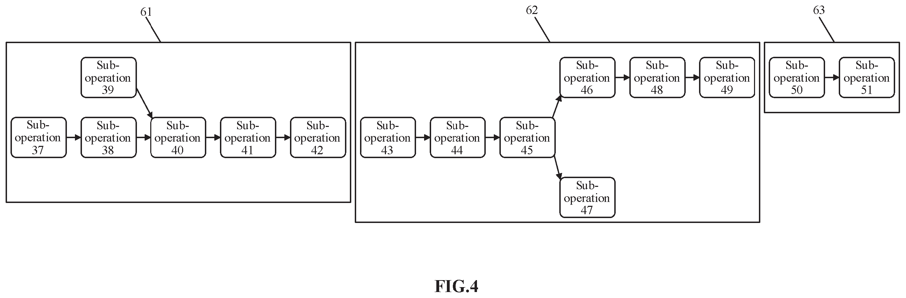

Exemplarily, an ordered series of operations may include one primary operation or multiple primary operations. In a case that the ordered series of operations includes one primary operation, all sub-operations in the ordered series are directly grouped as one operation group, which may also be considered as one operation set. In other words, for the case that there is one primary operation in the ordered series of operations, all operations in the ordered series belong to the same operation set. In a case that the ordered series of operations includes multiple primary operations, the grouping result can be viewed as three parts: one is the first operation group, one is the middle operation group(s), and one is the last operation group. The sub-operations in the first operation group include the sub-operation(s) executed before the first primary operation and the first primary operation. The middle operation group(s) includes the sub-operation(s) between two adjacent primary operations and the later-executed primary operation of the two adjacent primary operations. The last operation group includes the sub-operation(s) executed after the last primary operation. It can be understood that when the quantity of primary operations is more than 3, the quantity of middle operation groups is more than one. For example, when the quantity of primary operations is 4, the quantity of middle operation groups is two, one of which includes the sub-operation(s) between the first primary operation and the second primary operation together with the second primary operation (the second primary operation is executed later than the first primary operation), and the other of which includes the sub-operation(s) between the second primary operation and the third primary operation together with the third primary operation (the third primary operation is executed later than the second primary operation). FIG. 4 shows a grouping result based on the ordered series of operations in FIG. 3, and reference numerals 61, 62, and 63 in the figure represent the first operation group, the second operation group, and the third operation group, respectively.

Exemplarily, reference is made to the ordered series of operations in FIG. 3. Sub-operation 42 is the first primary operation. Sub-operations 37, 38, 39, 40, and 41 are all executed before the first primary operation. Therefore, sub-operations 37, 38, 39, 40, 41, and the primary operation (sub-operation 42) are grouped together as one operation group, that is, the first operation group 61 in FIG. 4. The primary operation corresponding to sub-operation 42 and the primary operation corresponding to sub-operation 49 are two adjacent primary operations in the ordered series of operations, and the sub-operations between them are sub-operations 43, 44, 45, 46, 47, and 48. Therefore, sub-operations 43, 44, 45, 46, 47, 48 between the two adjacent primary operations and the later-executed sub-operation 49 of the two primary operations are grouped together as the second operation group 62. It can be understood that depending on the quantity of primary operations, the quantity of second operation groups may be two or more. Sub-operations 50 and 51 are both executed later than the last primary operation (sub-operation 49). Therefore, sub-operations 50 and 51 are grouped as the third operation group 63.

In the above technical solution, in practical application scenarios (such as a process termination scenario), by grouping sub-operations using the method provided by the present disclosure, and implementing specific requirements (such as process termination requirements) based on the method, processing efficiency can be effectively improved.

In an embodiment, before step S120, the method further includes: deleting, for each primary operation in the ordered series of operations, a sequential relationship between the primary operation and a sub-operation next to the primary operation based on the ordered series of operations.

The sequential relationship refers to that, in the ordered series of operations, a sub-operation has a sequential relationship with a previous sub-operation and also has a sequential relationship with a following sub-operation. For example, if the sequential relationship between a sub-operation and its following sub-operation is deleted, the order between the sub-operation and the following sub-operation is removed. Diagrams are provided to facilitate understanding. For example, as shown in FIG. 3, sequential relationships are represented by directed arrows. For a primary operation like sub-operation 42, deleting its sequential relationship with the next sub-operation can be interpreted as deleting the edge (arrow) starting from this primary operation as shown in FIG.3. Specifically, the edge starting from sub-operation 42 (the primary operation) is deleted, and the edge starting from sub-operation 49 (the primary operation) is deleted. In this way, after deleting the sequential relationship between a primary operation and its next sub-operation, the next sub-operation of the primary operation is not obtainable based on the ordered series of operations.

In the above technical solution, by pre-deleting the sequential relationships between all primary operations and their next sub-operations in the ordered series of operations before grouping, grouping can be quickly achieved with each primary operation as a boundary, thereby improving the execution efficiency of the automated process.

Exemplarily, in an embodiment, step S120 may include steps S120a, S120b, and S120c.

In step S120a, an initial operation number is set for each of the multiple sub-operations in the ordered series of operations, and an operation group number of a current operation group is set to an initial value.

Exemplarily, an initial operation number, such as 0, is set for each sub-operation in the ordered series of operations. Similarly, the operation group number of the current operation group is set to an initial value, for example, which may also be 0. It can be understood that the operation number serves to represent a sub-operation, while the operation group number serves to represent an operation group including one or more sub-operations. For example, sub-operations 37 to 51 in FIG. 3 may each have an initial operation number of 0. After grouping, multiple operation groups are formed, each having its own operation group number. That is, the entire sequence sub-operation 37 → sub-operation 38 (sub-operation 39) → sub-operation 40 → sub-operation 41 → sub-operation 42 in FIG. 3 may be considered as one operation group.

In step S120b, each sub-operation in the ordered series of operations is traversed, and in response to an operation number of a current sub-operation being the initial operation number, the following steps are executed:
modifying the operation group number of the current operation group to a target value;
setting the operation number of the current sub-operation to the target value;
acquiring an adjacent sub-operation of the current sub-operation, and setting an operation number of the adjacent sub-operation to the target value in response to the operation number of the adjacent sub-operation being the initial operation number; repeating with the adjacent sub-operation by acquiring a yet adjacent sub-operation of the adjacent sub-operation and setting an operation number of the yet adjacent sub-operation to the target value in response to the operation number of the yet adjacent sub-operation being the initial operation number, until no further next adjacent sub-operation is obtainable for the adjacent sub-operation, and the traversal going to a next sub-operation in the ordered series of operations, where the target value differs for each modification during traversal.

It can be understood that for a primary operation, since the sequential relationship between the primary operation and its next sub-operation is deleted, the adjacent sub-operation of the primary operation is only the previous sub-operation. As shown in FIG. 3, when acquiring the adjacent sub-operation of sub-operation 42, there is only sub-operation 41.

The target value differs for each modification during traversal. For example, when modifying the operation group number of the current operation group, the current operation group number may be incremented by 1. As described above, when the operation group number of the current operation group is the initial value 0, and if the operation group number of the current operation group is required to be modified, the operation group number of the current operation group may be incremented by 1 based on the initial value (such as 0), that is, the operation group number of the current operation group is modified to a target value 1. In an embodiment, as shown in FIG. 3 and FIG. 4, when traversing sub-operation 37, since the operation number of sub-operation 37 is the initial operation number (such as 0), the operation group number of the current operation group (in this embodiment, the operation group number of the current operation group is 0) is modified to a target value, which is recorded as a first target value. When traversing sub-operation 43, since the operation number of sub-operation 43 is the initial operation number (such as 0), the operation group number of the current operation group is required to be modified to a second target value. It can be understood that the first target value and the second target value are different. For example, the first target value is 1, and the second target value is 2. That is, when it is required to modify the operation group number of the current operation group for the second time, the current operation group number is 1, so the current operation group number is incremented by 1. After modification, the operation group number of the current operation group is 2.

In step S120c, sub-operations with the same operation number are grouped into the same operation group.

Exemplarily, as shown in FIG. 3, the operation numbers of all sub-operations may first be set to an initial operation number, for example, set to 0. Meanwhile, the operation group number of the current operation group is set to an initial value, which may also be 0, for example. Firstly, the first sub-operation 37 is traversed. Since the operation number of sub-operation 37 under this condition is the initial operation number 0, the operation group number of the current operation group is modified from the initial number 0 to a target value 1, and the operation number of sub-operation 37 is set to this target value 1. Then, the adjacent sub-operation of sub-operation 37, that is, sub-operation 38, is acquired. Since the operation number of this adjacent sub-operation 38 is 0, the operation number of this adjacent sub-operation 38 is set to the target value 1. Next, the yet adjacent sub-operation for this adjacent sub-operation 38 is continued to be acquired, which includes sub-operation 37 and sub-operation 40. Since the operation number of adjacent sub-operation 40 is 0, the operation number of this adjacent sub-operation 40 is set to the target value 1. And the process repeats by analog, for this adjacent sub-operation 40 (the operation number of sub-operation 37 is not 0 under this condition, so this adjacent sub-operation 37 is not processed), the yet adjacent sub-operation is continued to be acquired... until for the sub-operation 42 as adjacent sub-operation, a next adjacent sub-operation of sub-operation 42 is no longer obtainable (because sub-operation 42 is a primary operation, and the sequential relationships between all primary operations and their next sub-operations are deleted beforehand). Therefore, operations related to sub-operation 37 are completed. Since the operation numbers of sub-operations 37 to 42 are all the same, all being 1, sub-operations 37 to 42 are grouped into the same operation group. In this way, the step S120 of "grouping a sub-operation executed before a first primary operation and the first primary operation into an operation group" is achieved.

Since after sub-operation 42, no further next adjacent sub-operation is obtainable, the traversal goes to the next sub-operation in the ordered series of operations. Under this condition, sub-operation 38 is to be traversed. That is, at this time the current sub-operation is sub-operation 38, and the above steps are performed. Since the operation numbers of sub-operations 38 to 42 are not the initial operation number, the traversal goes to sub-operation 43. Under this condition, the current sub-operation is sub-operation 43, and the operation number of sub-operation 43 is the initial operation number 0. Therefore, the operation group number of the current operation group is required to be modified. Thus, the operation group number of the current operation group is modified from the previous 1 to 2, and the operation number of the current sub-operation 43 is set to 2. The adjacent sub-operation of sub-operation 43 is acquired, that is, sub-operation 44. Since the operation number of sub-operation 44 is the initial operation number, the operation number of this adjacent sub-operation 44 is set to the current operation group number 2. And the process repeats by analog. For the adjacent sub-operation 44, the yet adjacent sub-operation of the adjacent sub-operation 44 is acquired, that is, sub-operation 45; and since the operation number of sub-operation 45 is the initial operation number, the operation number of this adjacent sub-operation 45 is set to the current operation group number 2. For this adjacent sub-operation 45, its adjacent sub-operations 46 and 47 are continued to be acquired, and so on. The operation numbers of these adjacent sub-operations 46, 47, 48, 49 are set to the current operation group number 2. For sub-operation 49 as an adjacent sub-operation, no further next adjacent sub-operation is obtainable (because sub-operation 49 is a primary operation, and the sequential relationships between all primary operations and their next adjacent sub-operations are deleted beforehand). Therefore, operations related to sub-operation 43 are completed. Since the operation numbers of sub-operations 43 to 49 are all the same, all being 2, sub-operations 43 to 49 are grouped into the same operation group. In this way, the step S120 of "grouping a sub-operation between two adjacent primary operations and a later-executed primary operation of the two adjacent primary operations into another operation group" is achieved.

Since after sub-operation 49, no further next adjacent sub-operation is obtainable, the traversal goes to the next sub-operation in the ordered series of operations. Under this condition, sub-operation 44 is traversed. That is, currently the current sub-operation is sub-operation 44. The above steps are continued. Since the operation numbers of sub-operations 44 to 49 are not the initial operation number, the traversal goes to sub-operation 50. The operation number of sub-operation 50 is the initial operation number 0. Therefore, the operation group number of the current operation group is required to be modified. Thus, the operation group number of the current operation group is modified from the previous 2 to 3. The process repeats by analog until the traversal ends, the operation numbers of sub-operations 50 and 51 are 3. In this way, the step of "grouping a sub-operation executed after a last primary operation into yet another operation group" is achieved.

In the above technical solution, by employing steps S120a, S120b, and S120c, all sub-operations in the ordered series of operations are grouped, so that in practical application, each group may be considered as a whole, thereby effectively improving the execution efficiency of the automated process.

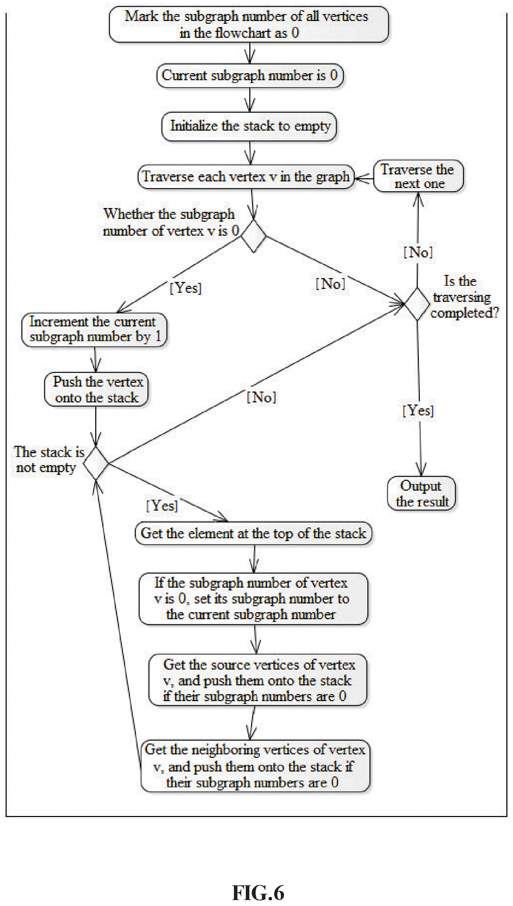

In an embodiment, the process described above may be implemented by using a stack. FIG. 6 shows a schematic flowchart of a specific implementation of step S120 according to an embodiment of the present disclosure. Step S120 may include steps S121, S122, and S123.

In step S121, a stack is created and initialized to be empty.

It can be understood that a stack, also known as a pushdown stack, is a linear list with restricted operations. It is a linear list in which insertion and popping (deletion) operations are restricted to only at the end of the list. This end is called the top of the stack, and the opposite end is called the bottom of the stack. Inserting a new element into a stack is also called pushing, which places a new element on top of the current top element, making it the new top element. Popping an element from a stack refers to popping the top element and making the adjacent element of the top element to be a new top element. The element here can be interpreted as the sub-operation in the ordered series of operations.

In step S122, an initial operation number for each of the multiple sub-operations in the ordered series of operations is set, and an operation group number of a current operation group is set to an initial value.

Exemplarily, each sub-operation in the ordered series of operations may be set to an initial operation number, for example, set to 0. Similarly, the operation group number of the current operation group may also be set to an initial value, for example, which may also be 0. It can be understood that the operation number serves to represent a sub-operation, while the operation group number serves to represent an operation group including one or more sub-operations. For example, sub-operations 37 to 51 in FIG. 3 may each have an initial operation number of 0. After grouping, multiple operation groups are formed, each having its own operation group number. That is, the entire sequence sub-operation 37 → sub-operation 38 (sub-operation 39) → sub-operation 40 → sub-operation 41 → sub-operation 42 in FIG. 3 may be considered as one operation group.

In step S123, each sub-operation in the ordered series of operations is traversed, and steps S123a to S123d are performed in response to an operation number of a current sub-operation being the initial operation number.

In step S123a, the operation group number is modified to a target value; and the current sub-operation is pushed onto the stack.

Exemplarily, in the ordered series of operations shown in FIG. 3, the first sub-operation 37 is traversed. Since the operation number of sub-operation 37 is the initial operation number (set in step S122), the operation group number of the current operation group is modified to a target value, that is, the operation group number of the current operation group is modified from the initial value (such as 0) to a target value, for example, the target value is 1. Correspondingly, sub-operation 37 is pushed onto the stack. Since the stack is set to empty before sub-operation 37 is pushed, currently sub-operation 37 is at the top of the stack.

In step S123a, in response to the operation number of the current sub-operation being the initial operation number, the operation group number of the current operation group is modified to a target value. It should be noted that when traversing this sub-operation (which may be interpreted as the current sub-operation), the operation group number of the current operation group is modified to a target value only when the operation number of this sub-operation is the initial operation number. Based on this, there may be multiple instances where the operation group number of the current operation group is modified. It can be understood that the target value is a general concept. It is not the case that each time the operation group number of the current operation group is modified to the same value; otherwise, grouping would be meaningless. Therefore, it can be understood that each time the operation group number is modified, the target value varies. For example, when modification of the operation group number of the current operation group is required, the current operation group number may be incremented by 1. As described above, when the operation group number of the current operation group is the initial value 0, if the operation group number of the current operation group is required to be modified, the operation group number of the current operation group is incremented by 1 based on the initial value (such as 0), that is, the operation group number of the current operation group is modified to a target value 1. In an embodiment, as shown in FIG. 3 and FIG. 4, when traversing sub-operation 37, since the operation number of sub-operation 37 is the initial operation number (such as 0), the operation group number of the current operation group (in this embodiment, the operation group number of the current operation group is 0) is modified to a target value, recorded as a first target value. When traversing sub-operation 43, since the operation number of sub-operation 43 is the initial operation number (such as 0), the operation group number of the current operation group is required to be modified to a second target value. It can be understood that the first target value and the second target value are different, for example, the first target value is 1, and the second target value is 2. That is, the current operation group number is 1 when it is required to modify the operation group number of the current operation group for the second time, so the current operation group number is incremented by 1. After modification, the operation group number of the current operation group is 2.

In step S123b, in response to determining that the stack is not empty, a popping step and a pushing step are executed. The popping step refers to popping a sub-operation at the top of the stack, and setting the operation number of the sub-operation to the target value in response to the operation number of the sub-operation being the initial operation number. The pushing step refers to acquiring an adjacent sub-operation of the sub-operation at the top of the stack, and pushing the adjacent sub-operation onto the stack in response to an operation number of the adjacent sub-operation being the initial operation number.

Exemplarily, a quantity of the adjacent sub-operation of a sub-operation may be one or more. In an embodiment, sub-operation 37 has only one adjacent sub-operation, that is, sub-operation 38; and sub-operation 40 has three adjacent sub-operations, which are sub-operation 39, sub-operation 38, and sub-operation 41. Sub-operation 38 has two adjacent sub-operations, which are sub-operation 37 and sub-operation 40. However, for some more complex automated processes, a sub-operation may have four, five, or even more adjacent sub-operations, which can be understood by those skilled in the art and will not be elaborated here.

Exemplarily, as described above, since sub-operation 37 is in the stack, the stack is not empty. Therefore, the popping step and pushing step are continuously executed. In an embodiment, reference is made to FIG. 3. Sub-operation 37 at the top of the stack is popped. Since the operation number of the sub-operation is the initial operation number 0, the operation number of sub-operation 37 is set to the aforementioned target value, that is, the current operation group number, which is 1. For the pushing step, the adjacent sub-operation of sub-operation 37 is acquired, which is sub-operation 38. Since the operation number of this adjacent sub-operation 38 is 0, this adjacent sub-operation 38 is pushed onto the stack. Since sub-operation 37 is already popped from the stack, the stack currently only includes sub-operation 38, and sub-operation 38 is at the top of the stack.

In step S123c, whether the stack is empty is determined, and the popping step and the pushing step are repeated until it is determined that the stack is empty.

Exemplarily, as described above, since sub-operation 38 is currently in the stack, the stack is not empty. Thus, the popping step and pushing step described above are repeated. In an embodiment, reference is made to FIG. 3. The sub-operation 38 at the top of the stack is popped. Since the operation number of sub-operation 38 is the initial operation number 0, the operation number of sub-operation 38 is set to the aforementioned target value, that is, the current operation group number, which is 1. The adjacent sub-operation of sub-operation 38 is acquired, which includes, sub-operation 37 and sub-operation 40. Since the operation number of this adjacent sub-operation 40 is 0, this adjacent sub-operation 40 is pushed onto the stack. Since sub-operation 38 is already popped from the stack, the stack currently only includes sub-operation 40, and sub-operation 40 is at the top of the stack. The operation number of sub-operation 37 is 1 (already set to 1 in step S123b), and is not the initial operation number, so sub-operation 37 is not required to be pushed onto the stack. Further, the stack is determined not empty, and the above popping step and pushing step are repeated until the stack is empty. It should be noted that since in previous steps, the sequential relationship between sub-operation 42 (a primary operation) and the next sub-operation (sub-operation 43) of sub-operation 42 is deleted, sub-operation 43 cannot be acquired when acquiring the adjacent sub-operation of sub-operation 42.

In an embodiment, the acquisition of adjacent sub-operations may be simultaneous or sequential. For example, a previous sub-operation of a sub-operation may be defined as a source sub-operation, and a following sub-operation of the sub-operation may be defined as a neighboring sub-operation. In this way, for sub-operation 40, the source sub-operation of sub-operation 40 may be acquired first, which includes, sub-operation 38 and sub-operation 39. Since the operation number of sub-operation 39 is the initial operation number 0, sub-operation 39 is pushed onto the stack. Under this condition, the stack only includes sub-operation 39 (sub-operation 38 is already popped) at the top. The neighboring sub-operation of sub-operation 40 is acquired continuously, that is, sub-operation 41. Since the operation number of sub-operation 41 is the initial operation number 0, sub-operation 41 is pushed onto the stack. Under this condition, the stack includes sub-operation 41 and sub-operation 39 from top to bottom. Since when sub-operation 41 is pushed onto the stack, sub-operation 39 is covered, sub-operation 41 is currently at the top of the stack. After determining that the stack is not empty, when popping the sub-operation at the top of the stack, the sub-operation 41 is popped. In the subsequent pushing step, the adjacent sub-operation 42 is acquired.

In step S123d, whether the traversing is completed is determined in response to determining that the stack is empty, and in response to the traversing not being completed, a next sub-operation in the ordered series of operations is traversed until all sub-operations are grouped.

Exemplarily, as described above, after processing the six sub-operations from sub-operation 37 to sub-operation 42, the stack is empty. Under this condition, the traversal is not completed (only sub-operation 37 is traversed). Therefore, traversal goes to sub-operation 38. For sub-operation 38, step S123 is returned. Since the operation number of sub-operation 38 under this condition is not the initial operation number (as known from above, the operation number of sub-operation 38 is currently 1), there is no need to continue executing steps S123a to S123c (the stack is still empty under this condition). Further, whether the above traversal is completed is determined, and it is determined that the traversal is not completed. Sub-operations 38 to 42 are in the same situation as sub-operation 37, and steps S123a to S123c (the stack is still empty under this condition) are not required for these sub-operations. Further, traversal goes to sub-operation 43. Since the operation number of sub-operation 43 is the initial operation number, steps S123a to S123c are executed, the operation group number of the current operation group is modified to a target value (for example, modified to 2), and sub-operation 43 is pushed onto the stack. Details of steps S123a to S123c are similar to those described for other steps above and will not be elaborated here.

Therefore, sub-operations in the automated process can be grouped through the method described above. For example, grouping the ordered series of operations in FIG. 3 results in: sub-operations 37, 38, 39, 40, 41, 42, whose corresponding operation numbers are all 1, thus belonging to the same operation group (first operation group, that is, a sub-operation executed before a first primary operation and the first primary operation are grouped into an operation group, where the first primary operation is 42, and in the ordered series of operations, sub-operations before this sub-operation are all executed before the primary operation 42). Sub-operations 43, 44, 45, 46, 47, 48, 49, whose corresponding operation numbers are all 2, thus belong to the same operation group (second operation group, that is, for two adjacent primary operations in the ordered series of operations, a sub-operation between the two adjacent primary operations and a later-executed primary operation of the two adjacent primary operations are grouped into another operation group, sub-operations 43 to 48 are all executed between primary operation 42 and primary operation 49, and primary operation 49 is executed after primary operation 42). It can be understood that depending on the number of primary operations, a quantity of the second operation group may be two or more. Sub-operations 50 and 51, whose corresponding operation numbers are both 3, thus belong to the same operation group (third operation group, that is, a sub-operation executed after a last primary operation is grouped into yet another operation group; the last primary operation is 49, and sub-operations executed after this primary operation are sub-operations 50 and 51).

Exemplarily, the method described above may further include step S130.

In step S130, an order of the multiple primary operations in the ordered series of operations is determined based on the ordered series of operations, to obtain an ordered primary operation sequence.

In an ordered series of operations, each sub-operation is ordered, and primary operations are also sub-operations in the ordered series of operations. Therefore, the order of primary operations can be determined based on the ordered series of operations.

Exemplarily, in the embodiment corresponding to FIG. 3, the order of primary operations determined according to the ordered series of operations is sub-operation 42 (primary operation) → sub-operation 49 (primary operation), that is, the primary operation corresponding to sub-operation 42 is before the primary operation corresponding to sub-operation 49.

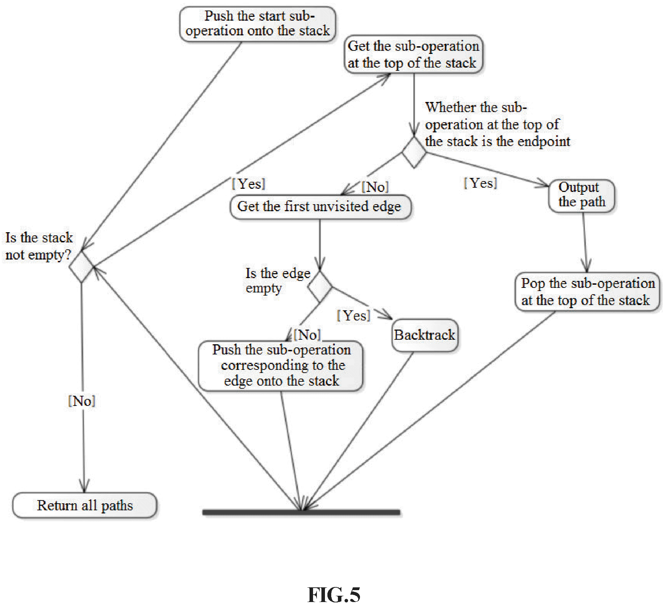

Exemplarily, reference is made to FIG. 3 and the flowchart of primary operation path calculation (that is, determining the ordered primary operation sequence) shown in the embodiment corresponding to FIG. 5. For the embodiment in FIG. 3, the ordered primary operation sequence is determined as follows. First, sub-operations that are not primary operations are deleted, and only primary operations, which are, sub-operation 42 and sub-operation 49 (sub-operation 42 → sub-operation 49) are left. A stack is created and initialized to be empty (details about the stack will be introduced later). Sub-operation 42 is pushed onto the stack, and it is determined whether the stack is empty. In response to the stack not being empty, the sub-operation at the top of the stack, which is sub-operation 42, is acquired. And then, whether the sub-operation at the top of the stack is an endpoint is determined. In response to the sub-operation at the top of the stack not being an endpoint, the first unvisited edge is acquired (which may be interpreted as acquiring the sequential relationship between this sub-operation and the next sub-operation; failing in the acquiring indicates that next sub-operation of this sub-operation is not present while a success in the acquiring indicates that next sub-operation of this sub-operation is present). In response to the edge not being empty, the sub-operation corresponding to this edge, that is, sub-operation 49, is pushed onto the stack. Whether the stack is empty is continuously to be determined. In response to the stack being not empty (stack includes sub-operations 49 and 42 from top to bottom), the sub-operation at the top of the stack, that is sub-operation 49, is acquired. It is determined whether the sub-operation 49 at the top of the stack is an endpoint. In response to sub-operation 49 not being the endpoint, the first unvisited edge is acquired again, and the loop is repeated. In response to sub-operation 49 being the endpoint, the primary operation path sub-operation 42 → sub-operation 49 is outputted.

The sub-operation 49 at the top of the stack is popped, the stack is not empty, and then the sub-operation at the top of the stack, which is sub-operation 42, is acquired. The sub-operation 42 at the top of the stack is not an endpoint, and then the first unvisited edge is to be acquired. While first unvisited edge is not present, backtracking is performed (sub-operation 42 is popped, backtracking is performed until a new edge is acquired; if no new edge is acquired until the stack is emptied, backtracking ends). Whether the stack is empty is determined again. When the stack is empty, the result is outputted. In this embodiment, there is only one path.

In an embodiment, after step S120, S140 and S150 are further included.

In step S140, each operation group is traversed, and an intersection between sub-operations included in the current operation group and the ordered primary operation sequence is determined.

Each operation group in step S120 is traversed. For example, referring to FIG. 4, the first operation group 61 is traversed. The first operation group 61 includes sub-operations 37 to 42. The ordered primary operation sequence determined in step S131 is sub-operation 42 (primary operation) → sub-operation 49 (primary operation). Therefore, the intersection between the first operation group 61 and the ordered primary operation sequence includes sub-operation 42 (primary operation). When traversing the second operation group 62, this operation group 62 includes sub-operations 43 to 49. The ordered primary operation sequence determined in step S131 is sub-operation 42 (primary operation) → sub-operation 49 (primary operation). Therefore, the intersection between the second operation group 62 and the ordered primary operation sequence includes sub-operation 49 (primary operation). For the third operation group 63, the intersection between the third operation group 63 and the ordered primary operation sequence is empty.

In step S150, in response to the intersection being non-empty, whether each sub-operation in the current operation group belongs to a same operation set as a primary operation in the intersection is determined according to a position of the primary operation within the ordered primary operation sequence and a correspondence between each sub-operation in the current operation group and the primary operation, to complete grouping of sub-operations, where the correspondence is a correspondence between the primary operation and the auxiliary operation.

Exemplarily, the position, within the ordered primary operation sequence, of the primary operation in the intersection includes whether this primary operation is the first primary operation in the ordered primary operation sequence. When the primary operation is the first primary operation, all sub-operations in the current operation group belong to the first operation set. When the primary operation is not the first primary operation, the operation set to which each sup-operation belongs is determined according to the correspondence between the sub-operation and the primary operation. The correspondence between the primary operation and auxiliary operation (the sub-operation other than the primary operation) is introduced above and is not elaborated here.

In the technical solution described above, by employing steps S140 and S150 to further optimize the grouping result of step S120, sub-operations in the ordered series of operations can be accurately grouped. In practical applications, each group may be considered as a whole, thereby effectively improving the execution efficiency of the automated process.

Exemplarily, step S150 may include steps S151 and S152.

In step S151, it is determined that all sub-operations in the current operation group belong to the same operation set, in response to the primary operation in the intersection being the first primary operation in the ordered primary operation sequence.

Exemplarily, referring to the embodiment shown in FIG. 3 and FIG. 4, the intersection between the first operation group 61 (including sub-operations 37 to 42) and the ordered primary operation sequence (including sub-operation 42, sub-operation 49) includes sub-operation 42, which is the first primary operation. Therefore, all sub-operations in the first operation group 61 belong to the same operation set, which is the first operation set in this embodiment.

In step S152, in response to the primary operation in the intersection not being the first primary operation in the ordered primary operation sequence, whether each sub-operation in the current operation group belongs to the same operation set as the primary operation in the intersection is determined according to the following steps S152a and S152b.

In step S152a, in response to a sub-operation in the current operation group being a primary operation, it is determined that the sub-operation being the primary operation belongs to another operation set.

In step S152b, in response to a sub-operation in the current operation group being an auxiliary operation, it is determined whether the auxiliary operation belongs to the same operation set as the primary operation in the intersection based on a correspondence between the auxiliary operation and a previous primary operation.

Exemplarily, in step S152b, in response to a sub-operation in the operation group being an auxiliary operation and the auxiliary operation not belonging to the same operation set as the primary operation, it is determined whether the auxiliary operation belongs to the same operation set as a next primary operation based on a correspondence between the auxiliary operation and the next primary operation. Reference is made to the embodiment shown in FIG. 3. For the second operation group 62 (including sub-operations 43 to 49), the intersection between this operation group and the ordered primary operation sequence (including sub-operation 42, sub-operation 49) includes sub-operation 49, which is not the first primary operation. Thus, it is required to traverse each sub-operation in the second operation group 62 to determine whether all sub-operations in the second operation group 62 belong to the first operation set or the next operation set. In an embodiment, for sub-operation 43, since this sub-operation 43 is not a primary operation but an auxiliary operation, and this sub-operation 43 is a post-operation to the previous primary operation (sub-operation 42) (the correspondence between the primary operation and the auxiliary operation), this sub-operation 43 belongs to the same operation set as the primary operation (sub-operation 42). As described above, sub-operation 42 already belongs to the first operation set (the previous operation set). Therefore, sub-operation 43 also belongs to the first operation set. Similarly, sub-operations 44 and 47 also belong to the first operation set. For sub-operation 45, since this sub-operation 45 is not a primary operation but an auxiliary operation, and this sub-operation 45 is a pre-operation of the next primary operation (sub-operation 49) (the correspondence between the primary operation and the auxiliary operation), this sub-operation 45 belongs to the same operation set as the next primary operation (sub-operation 49).

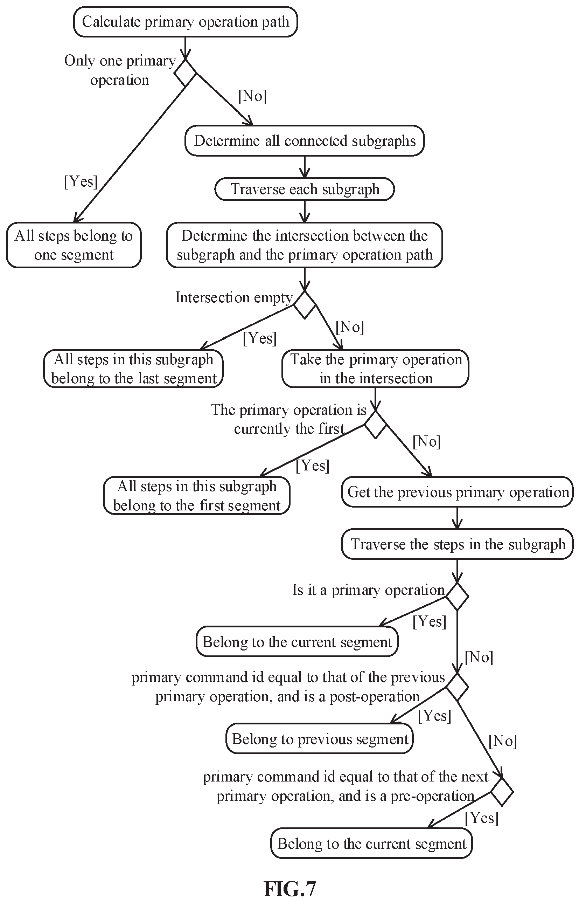

In the above technical solution, in conjunction with the logical diagram shown in FIG. 7, sub-operations can be grouped in practical application scenarios (for example, a process termination scenario). Based on this, the corresponding operation sets are considered as a whole to determine which steps need to be retained and how to create new sub-operations, thereby effectively improving processing efficiency. This technical solution may also be applied to other scenarios, such as candidate set calculation for scheduling, planning parameter construction, device allocation, resource locking, or the like. For example, the technical solution may be applied to candidate set calculation for scheduling. After a process starts running, each sub-operation is added to a to-be-scheduled list before it starts execution. When a sub-operation should be added to the to-be-scheduled list depends on dependency relationships between sub-operations and should satisfy conditions such as device resource occupancy relationships, plate position occupancy relationships, lid position occupancy relationships, and planning time. And these conditions cannot be determined merely based on a single sub-operation, so that it is required to consider the set to which the sub-operation belongs as a whole, according to the present disclosure. The technical solution may be applied to planning parameter construction. During planning, not only information for each sub-operation is required, but also other information such as device resource information, plate position occupancy information, lid position occupancy information, time constraint information, or the like is required. Some information, such as information on the pre-operations and post-operations associated with a primary operation, is required to be calculated based on the present disclosure. This information is passed as parameters to the planning. The technical solution may be applied to device allocation. There may be more than one device of the same type in the system, hence the concept of device pool exists. Therefore, a certain type of device selected during process design may change during process execution based on the number of devices in the pool and the device pool usage strategy. In an embodiment, planning clarifies which device(s) is ultimately used in the first step. This process is assigning a device to each sub-operation. Since a primary operation and its associated pre-operation and post-operation generally belong to the same device, it is required to consider the so-determined set to which the primary operation and its associated pre-operations and post-operations belong as a whole. The technical solution may be applied to resource locking. A device may be considered as a resource, and several sub-operations may use the same device resource. As long as any sub-operation starts execution, its corresponding device resource enters a locked state, and other throughputs are not allowed to use that device. Moreover, due to dynamic planning caused by scenarios such as device online/offline or branch switching during process execution, it is required to determine when sub-operations of other throughputs are allowed to use the locked device based on the locked state of device resources. Therefore, in this case, it is also required to consider the operation set corresponding to the sub-operations as a whole.

Exemplarily, each operation group is traversed, an intersection between sub-operations included in the operation group and the ordered primary operation sequence is determined, and in response to the intersection being empty, all sub-operations in the current operation group are determined to belong to the last operation set.

Exemplarily, when traversing an operation group, if the intersection between sub-operations in the operation group and the ordered primary operation sequence is empty, then the entire operation group belongs to the last operation set. In the embodiment described in FIG. 4, the intersection between the third operation group 63 (sub-operations 50 and 51) and the ordered primary operation sequence (sub-operation 42, sub-operation 49) is empty. Therefore, all sub-operations in the third operation group 63 belong to the last operation set.

Exemplarily, an automated process includes a start node, one or more intermediate nodes, and an end node. The start node represents the position where a sample is located before the automated process starts. The end node represents the position where the sample is located after the automated process ends. The intermediate node includes one or more device nodes, and represents positions where the sample is located when performing related operations between the start position and the end position. The device node may be considered as an intermediate node. The start node may correspond to multiple samples. Before step S120, the method includes: determining per-sample ordered series of operations, based on the ordered series of operations. In this case, in step S120, based on the per-sample ordered series of operations, each primary operation in each of the per-sample ordered series of operations is determined.

It can be understood that the above technical solution is mainly applicable to situations where multiple samples are involved in an automated process. That is, the ordered series of operations and the sample are in a correspondence relationship, and in turn the essence of the ordered series of operations is sample-related or sample-centric. For example, operations are performed for the sample regardless of the type being the primary operation, the pre-operation or the post-operation.

According to the technical solution described above, for situations where multiple samples are involved, grouping can be performed sample-centrically. According to pre-set correspondences between samples and nodes in the automated process, several ordered series of operations are acquired. For each of the several ordered series of operations, correspondence between a sample and the ordered series of operations can be determined based on connections among the multiple nodes. Thus, accurate grouping can be achieved from the sample perspective, thereby achieving efficient handling or execution of specific application scenarios, with high applicability and easy promotion.

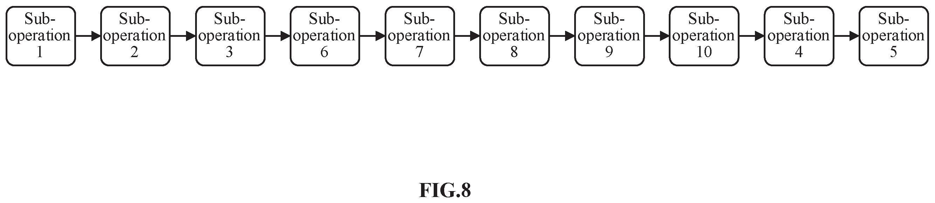

Exemplarily, for some application scenarios, the ordered series of operations may be acquired according to the connections among the multiple nodes and some special requirements arising during execution. For example, in a scenario of dynamically requesting pipette tip, a liquid workstation may lack pipette tip for liquid transfer during process execution, and an operation related to pipette tip loading needs to be inserted in this case, thereby obtaining an ordered series of operations. FIG. 8 shows a schematic diagram of an ordered series of operations acquired according to connections among the multiple nodes in another automated process according to an embodiment of the present disclosure, specifically a schematic diagram of an ordered series of operations for dynamically requesting pipette tip. The sub-operations 6 to 10 are inserted for pipette tip loading. Specifically, sub-operation 6 is within the liquid workstation for transferring an empty tray for the pipette tip out of the liquid workstation. Sub-operations 7 and 8 are robotic arm transferring the tray into the liquid workstation. Sub-operation 9 is transferring the tray for the pipette tip within the liquid workstation. Sub-operation 10 is a newly inserted primary operation (since the primary operation corresponding to sub-operation 3 cannot be performed due to lack of pipette tips, the new primary operation is required to be inserted). According to the technical solution described above, sub-operation 1, sub-operation 2 and sub-operation 3 (primary operation) belong to one operation group; sub-operation 6 to sub-operation 10 belong to a second operation group; and sub-operation 4 and sub-operation 5 belong to a third operation group. The first group, the second group, and the third operation group are separately traversed using the technical solution described above. Since sub-operation 6 is a post-operation to sub-operation 3 (primary operation), sub-operation 9 is a pre-operation to sub-operation 10 (primary operation), and sub-operations 6, 7, 8 and 9 are steps for transferring the pipette tip from sub-operation 3 (primary operation) to sub-operation 10 (primary operation), they can be regard as serving either sub-operation 3 (primary operation) or sub-operation 10 (primary operation). Therefore, sub-operations 6, 7, 8 and 9 are shared operations. Thus, sub-operations 1-3, 6, 7, 8 and 9 (7 sub-operations) belong to the same operation set, and sub-operations 4 and 10 belong to another operation set. Therefore, a shared operation may not just be a transfer operation or a commutating operation, it may be other operations. Whether a sub-operation is a shared operation depends on its relationship with a previous primary operation and a next primary operation, or depends on whether the sub-operation serves devices corresponding to two primary operations. For example, since a door opening sub-operation serves only one device corresponding to a primary operation, the door opening sub-operation is not a shared operation. While the transfer operation and the commutating operation are performed when transferring samples between two devices, namely serving devices corresponding to two primary operations, and therefore are shared operations.

The technical solution described is also applicable to special scenarios like dynamically requesting pipette tip. With the technical solution, the special scenarios can be handled quickly and effectively, and execution of corresponding processes can be controlled.

According to the present disclosure, in practical application scenarios (for example, a process termination scenario), by processing and controlling the process using the method for grouping sub-operations in an automated process provided by the present disclosure, processing efficiency can be effectively improved. Specifically, during the execution of an automated process, when a "terminate" command is to be executed for the automated process, the grouping method provided by the present disclosure is used to group sub-operations, so as to form multiple operation groups. Subsequently, the corresponding operation groups are regarded as a whole for considering subsequent related issues or steps. Compared to a method of deleting remaining unexecuted sub-operations and adding operations to go to a specified position, the method for grouping sub-operations in an automated process according to the present disclosure is more efficient and has strong reusability when applied to special application scenarios (for example, process termination), and such advantages are particularly evident for complex automated processes.

According to a second aspect of the present disclosure, a control method for an automated process is provided, and the control method includes the aforementioned method for grouping sub-operations in the automated process. Specifically, in the control method, sub-operations in the automated process are grouped and then the execution of the automated process is controlled based on the grouping result.

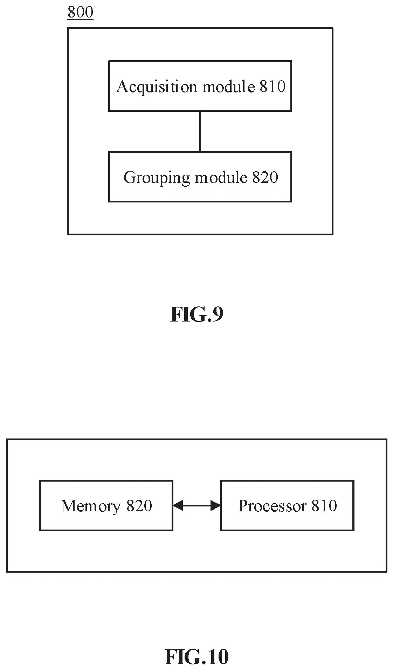

According to a third aspect of the present disclosure, a control apparatus for an automated process is provided. FIG. 9 shows a schematic block diagram of a control apparatus 800 for an automated process according to an embodiment of the present disclosure. As shown in FIG. 9, the apparatus 800 may include an acquisition module 810 and a grouping module 820.

The acquisition module 810 may be configured to acquire an ordered series of operations of the automated process, where the ordered series of operations is acquired at least based on connections among the multiple nodes in the automated process, the ordered series of operations includes multiple ordered sub-operations, among which sub-operations that appear earlier in the order have an execution time earlier than those that appear later, the plurality of sub-operations are categorized into a type of primary operation and a type of auxiliary operation other than the primary operation, the type of primary operation includes operation(s) that corresponds to the device node and corresponds to a primary function of the device node.

The grouping module 820 may be configured to, based on the ordered series of operations, group a sub-operation executed before a first primary operation and the first primary operation into an operation group; for two adjacent primary operations in the ordered series of operations, group a sub-operation between the two adjacent primary operations and a later-executed primary operation of the two adjacent primary operations into another operation group; and group a sub-operation executed after a last primary operation into yet another operation group.

According to a fourth aspect of the present disclosure, an electronic device is provided. FIG. 10 shows a schematic block diagram of an electronic device 900 according to an embodiment of the present disclosure. As shown in FIG. 10, the electronic device 900 includes a processor 910 and a memory 920. The memory 920 stores computer program instructions. The computer program instructions, when executed by the processor 910, implement the aforementioned method 100 for grouping sub-operations in an automated process.

According to a fifth aspect of the present disclosure, a storage medium is provided. Program instructions are stored in the storage medium. The program instructions, when executed, implement the aforementioned method 100 for grouping sub-operations in an automated process. The storage medium may include, for example, a storage component of a tablet computer, a hard disk of a personal computer, a read-only memory (ROM), an erasable programmable read-only memory (EPROM), a portable compact disc read-only memory (CD-ROM), a USB memory, or any combination of the storage media described above. The computer-readable storage medium may be any combination of one or more computer-readable storage media.

Those of ordinary skill in the art can understand the specific implementation solutions of the above apparatus for grouping sub-operations in an automated process, electronic device, and storage medium by reading related descriptions of the method for grouping sub-operations in an automated process and the control method for an automated process. For brevity, they are not repeated here.

### Embodiments

Embodiment 1. A method for grouping sub-operations in an automated process, where the automated process comprises a plurality of nodes connected with each other, and the plurality of nodes comprises at least one device node; the method comprises:
acquiring an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, and the type of primary operation comprises an operation that corresponds to the device node and corresponds to a primary function of the device node; and
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

Embodiment 2. The method according to embodiment 1, where before the "based on the ordered series of operations, grouping a sub-operation executed before a first primary operation and the first primary operation into an operation group; for every two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method comprises:
deleting, for each primary operation in the ordered series of operations, a sequential relationship between the primary operation and a sub-operation next to the primary operation, based on the ordered series of operations.

Embodiment 3. The method according to embodiment 1 or 2, where the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
setting an initial operation number for each of the plurality of sub-operations in the ordered series of operations, and setting an operation group number of a current operation group to an initial value;
traversing each of the plurality of sub-operations in the ordered series of operations, and in response to an operation number of a current sub-operation being the initial operation number, performing:
   modifying the operation group number of the current operation group to a target value;
   setting the operation number of the current sub-operation to the target value; and
   acquiring every adjacent sub-operation of the current sub-operation, and setting an operation number of the adjacent sub-operation to the target value in response to the operation number of the adjacent sub-operation being the initial operation number; repeating with the adjacent sub-operation by acquiring a yet adjacent sub-operation of the adjacent sub-operation and setting an operation number of the yet adjacent sub-operation to the target value in response to the operation number of the yet adjacent sub-operation being the initial operation number, until no further next adjacent sub-operation is obtainable for the adjacent sub-operation, and the traversal going to a next sub-operation in the ordered series of operations, wherein the target value differs for each modification during traversal; and
grouping sub-operations with the same operation number into the same operation group.

Embodiment 4. The method according to any of embodiments 1 to 3, where the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
creating a stack and initializing the stack to be empty;
setting an initial operation number for each of the plurality of sub-operations in the ordered series of operations, and setting an operation group number of a current operation group to an initial value; and
traversing each of the plurality of sub-operations in the ordered series of operations, and in response to an operation number of a current sub-operation being the initial operation number, performing:
   modifying the operation group number of the current operation group to a target value; and pushing the current sub-operation onto the stack;
   executing, in response to determining that the stack is not empty, a popping step and a pushing step, wherein
      the popping step refers to: popping a sub-operation at a top of the stack, and setting the operation number of the sub-operation to the target value in response to the operation number of the sub-operation being the initial operation number; and
      the pushing step refers to: acquiring an adjacent sub-operation of the sub-operation at the top of the stack, and pushing the adjacent sub-operation onto the stack in response to an operation number of the adjacent sub-operation being the initial operation number;
   determining whether the stack is empty, and repeating the popping step and the pushing step until it is determined that the stack is empty; and
   determining, in response to determining that the stack is empty, whether the traversing is completed, and in response to the traversing not being completed, traversing a next sub-operation in the ordered series of operations until all sub-operations are grouped.

Embodiment 5. The method according to any one of embodiments 1 to 4, where the method further comprises: determining, based on the ordered series of operations, an order of the primary operations in the ordered series of operations to obtain an ordered primary operation sequence;
after the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method further comprises:
traversing each operation group, determining an intersection between sub-operations included in a current operation group and the ordered primary operation sequence;
in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations, wherein the correspondence is a correspondence between the primary operation and the auxiliary operation.

Embodiment 6. The method according to any of embodiments 1 to 5, where the in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations comprises:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
   in response to a sub-operation in the current operation group being a primary operation, determining that the sub-operation being the primary operation belongs to another operation set; and
   in response to a sub-operation in the current operation group being an auxiliary operation, determining whether the auxiliary operation belongs to the same operation set as the primary operation in the intersection based on a correspondence between the auxiliary operation and a previous primary operation.

Embodiment 7. The method according to any of embodiments 1 to 6, further comprising, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

Embodiment 8. The method according to any of embodiments 1 to 7, further comprising determining that all sub-operations in the current operation group belong to a last operation set in response to the intersection being empty.

Embodiment 9. A control method for an automated process, comprising the method for grouping sub-operations in the automated process according to any one of embodiments 1 to 8.

Embodiment 10. An apparatus for grouping sub-operations in an automated process, where the automated process comprises a plurality of nodes connected with each other, and the plurality of nodes comprises at least one device node; the apparatus comprises:
an acquisition module, configured to acquire an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, the type of primary operation comprises an operation that corresponds to the device node and corresponds to a primary function of the device node; and
a grouping module, configured to, based on the ordered series of operations, group a sub-operation executed before a first primary operation and the first primary operation into an operation group; for two adjacent primary operations in the ordered series of operations, group a sub-operation between the two adjacent primary operations and a later-executed primary operation of the two adjacent primary operations into another operation group; and group a sub-operation executed after a last primary operation into yet another operation group.

Embodiment 11. An electronic device, comprising a processor and a memory, where the memory stores computer program instructions, and the computer program instructions, when executed by the processor, implement the method for grouping sub-operations in an automated process according to any one of embodiments 1 to 8.

Embodiment 12. A storage medium, where program instructions are stored in the storage medium, and the program instructions, when executed, implement the method for grouping sub-operations in an automated process according to any one of embodiments 1 to 8.

Although example embodiments have been described with reference to the drawings herein, it should be understood that the above example embodiments are merely illustrative and are not intended to limit the scope of the present disclosure thereto. Various changes and modifications can be made by those of ordinary skill in the art without departing from the scope and spirit of the present disclosure. All such changes and modifications are intended to be included within the scope of the present disclosure as embodied in the appended embodiments.

Those of ordinary skill in the art may realize that the units and algorithm steps of the various examples described in connection with the embodiments disclosed herein can be implemented in electronic hardware, or a combination of computer software and electronic hardware. Whether these functions are performed in hardware or software depends on the specific application and design constraints of the technical solution. Professionals can use different methods for each specific application to implement the described functions, but such implementation should not be considered beyond the scope of the present disclosure.

In the several embodiments provided in the present disclosure, it should be understood that the disclosed apparatus and method may be implemented in other ways. For example, the apparatus embodiments described above are merely illustrative. For example, the division of units is only a logical function division. In actual implementation, there may be other division manners, for example, multiple units or components may be combined or integrated into another device, or some features may be omitted or not performed.

In the description provided herein, numerous specific details are set forth. However, it can be understood that embodiments of the present disclosure may be practiced without these specific details. In some instances, well-known methods, structures, and techniques are not shown in detail so as not to obscure the understanding of this description.

Similarly, it should be understood that in order to streamline the present disclosure and aid in understanding one or more of the various inventive aspects, in the foregoing description of the exemplary embodiments of the present disclosure, various features of the present disclosure are sometimes grouped together into a single embodiment, figure, or description thereof. However, the method of the present disclosure should not be interpreted as reflecting an intention that the claimed present disclosure requires more features than those expressly recited in each claim. Rather, as the claims reflect, inventive subject matter lies in less than all features of a single disclosed embodiment. Thus, the claims following the detailed description are hereby expressly incorporated into this detailed description, with each claim standing on its own as a separate embodiment of the present disclosure.

Those skilled in the art can understand that except where features are mutually exclusive, any combination of all features disclosed in this specification (including the accompanying claims, abstract, and drawings) and all processes or units of any method or apparatus so disclosed may be employed. Unless explicitly stated otherwise, each feature disclosed in this specification (including the accompanying claims, abstract, and drawings) may be replaced by an alternative feature serving the same, equivalent, or similar purpose.

Furthermore, those skilled in the art can understand that although some embodiments described herein include certain features but not other features included in other embodiments, combinations of features of different embodiments are meant to be within the scope of the present disclosure and form different embodiments. For example, in the claims, any of the claimed embodiments can be used in any combination.

The various component embodiments of the present disclosure may be implemented in hardware, or in software modules running on one or more processors, or in a combination thereof. Those skilled in the art will appreciate that a microprocessor or digital signal processor (DSP) may be used in practice to implement some or all of the functions of some modules in the panel detection apparatus according to embodiments of the present disclosure. The present disclosure may also be implemented as apparatus programs (for example, computer programs and computer program products) for performing part or all of the methods described herein. Such programs implementing the present disclosure may be stored on computer-readable media or may be in the form of one or more signals. Such signals may be downloaded from Internet websites, provided on carrier signals, or provided in any other form.

It should be noted that the above embodiments illustrate rather than limit the present disclosure, and those skilled in the art can design alternative embodiments without departing from the scope of the appended claims. In the claims, any reference signs placed between parentheses shall not be construed as limiting the claim. The word "comprising/comprise" does not exclude the presence of elements or steps not listed in a claim. The word "a" or "an" preceding an element does not exclude the presence of multiple such elements. The present disclosure may be implemented by means of hardware including several distinct elements and by means of a suitably programmed computer. In unit claims enumerating several apparatuses, several of these apparatuses may be embodied by one and the same item of hardware. The use of the words first, second, and third, or the like, does not indicate any order. These words may be interpreted as names.

The above descriptions are only specific implementations of the present disclosure or explanations of specific implementations. The protection scope of the present disclosure is not limited thereto. Any changes or substitutions that can be readily conceived by those skilled in the art within the technical scope disclosed in the present disclosure shall fall within the protection scope of the present disclosure. The protection scope of the present disclosure shall be subject to the protection scope of the claims.

## Claims

1. A method for grouping sub-operations in an automated process, **characterized in that** the automated process comprises a plurality of nodes connected with each other, and the plurality of nodes comprises at least one device node; the method comprises:
acquiring an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, and the type of primary operation comprises an operation that corresponds to the device node and corresponds to a primary function of the device node; and
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

2. The method according to claim 1, **characterized in that** before the "based on the ordered series of operations, grouping a sub-operation executed before a first primary operation and the first primary operation into an operation group; for every two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method comprises:
deleting, for each primary operation in the ordered series of operations, a sequential relationship between the primary operation and a sub-operation next to the primary operation, based on the ordered series of operations.

3. The method according to claim 2, **characterized in that** the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
setting an initial operation number for each of the plurality of sub-operations in the ordered series of operations, and setting an operation group number of a current operation group to an initial value;
traversing each of the plurality of sub-operations in the ordered series of operations, and in response to an operation number of a current sub-operation being the initial operation number, performing:
modifying the operation group number of the current operation group to a target value;
setting the operation number of the current sub-operation to the target value; and
acquiring every adjacent sub-operation of the current sub-operation, and setting an operation number of the adjacent sub-operation to the target value in response to the operation number of the adjacent sub-operation being the initial operation number; repeating with the adjacent sub-operation by acquiring a yet adjacent sub-operation of the adjacent sub-operation and setting an operation number of the yet adjacent sub-operation to the target value in response to the operation number of the yet adjacent sub-operation being the initial operation number, until no further next adjacent sub-operation is obtainable for the adjacent sub-operation, and the traversal going to a next sub-operation in the ordered series of operations, wherein the target value differs for each modification during traversal; and
grouping sub-operations with the same operation number into the same operation group.

4. The method according to claim 2, **characterized in that** the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
creating a stack and initializing the stack to be empty;
setting an initial operation number for each of the plurality of sub-operations in the ordered series of operations, and setting an operation group number of a current operation group to an initial value; and
traversing each of the plurality of sub-operations in the ordered series of operations, and in response to an operation number of a current sub-operation being the initial operation number, performing:
modifying the operation group number of the current operation group to a target value; and pushing the current sub-operation onto the stack;
executing, in response to determining that the stack is not empty, a popping step and a pushing step, wherein
the popping step refers to: popping a sub-operation at a top of the stack, and setting the operation number of the sub-operation to the target value in response to the operation number of the sub-operation being the initial operation number; and
the pushing step refers to: acquiring an adjacent sub-operation of the sub-operation at the top of the stack, and pushing the adjacent sub-operation onto the stack in response to an operation number of the adjacent sub-operation being the initial operation number;
determining whether the stack is empty, and repeating the popping step and the pushing step until it is determined that the stack is empty; and
determining, in response to determining that the stack is empty, whether the traversing is completed, and in response to the traversing not being completed, traversing a next sub-operation in the ordered series of operations until all sub-operations are grouped.

5. The method according to any one of claims 1 to 4, **characterized in that** the method further comprises: determining, based on the ordered series of operations, an order of the primary operations in the ordered series of operations to obtain an ordered primary operation sequence;
after the "based on the ordered series of operations, grouping a sub-operation executed before a first primary operation and the first primary operation into an operation group ; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group", the method further comprises:
traversing each operation group, determining an intersection between sub-operations included in a current operation group and the ordered primary operation sequence;
in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations, wherein the correspondence is a correspondence between the primary operation and the auxiliary operation.

6. The method according to claim 5, **characterized in that** the in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, to complete grouping of sub-operations comprises:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
in response to a sub-operation in the current operation group being a primary operation, determining that the sub-operation being the primary operation belongs to another operation set; and
in response to a sub-operation in the current operation group being an auxiliary operation, determining whether the auxiliary operation belongs to the same operation set as the primary operation in the intersection based on a correspondence between the auxiliary operation and a previous primary operation.

7. The method according to claim 6, **characterized by**, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

8. The method according to claim 5, **characterized by** determining that all sub-operations in the current operation group belong to a last operation set in response to the intersection being empty.

9. A control method for an automated process, **characterized by** comprising the method for grouping sub-operations in the automated process according to any one of claims 1 to 8.

10. An apparatus for grouping sub-operations in an automated process, **characterized in that** the automated process comprises a plurality of nodes connected with each other, and the plurality of nodes comprises at least one device node; the apparatus comprises:
an acquisition module, configured to acquire an ordered series of operations of the automated process, wherein the ordered series of operations is acquired at least based on connections among the plurality of nodes in the automated process, the ordered series of operations comprises a plurality of ordered sub-operations, among which sub-operations that appear earlier in the order have an execution time earlier than those that appear later, the plurality of sub-operations are categorized into a type of primary operation and a type of auxiliary operation other than the primary operation, the type of primary operation comprises an operation that corresponds to the device node and corresponds to a primary function of the device node; and
a grouping module, configured to, based on the ordered series of operations, group a sub-operation executed before a first primary operation and the first primary operation into an operation group; for two adjacent primary operations in the ordered series of operations, group a sub-operation between the two adjacent primary operations and a later-executed primary operation of the two adjacent primary operations into another operation group; and group a sub-operation executed after a last primary operation into yet another operation group.

11. An electronic device, comprising a processor and a memory, **characterized in that** the memory stores computer program instructions, and the computer program instructions, when executed by the processor, implement the method for grouping sub-operations in an automated process according to any one of claims 1 to 8.

12. A storage medium, **characterized in that** program instructions are stored in the storage medium, and the program instructions, when executed, implement the method for grouping sub-operations in an automated process according to any one of claims 1 to 8.
